# FASCICULE DE BREVET EUROPEEN

(11) **EP 3 283 812 B1**
(45) Date de publication et mention de la délivrance du brevet: **18.03.2020**
(21) Numéro de dépôt: 16719321.8
(22) Date de dépôt: 15.04.2016
(51) Int. Cl.: F17C 1/16

(54) **PROCEDE DE PREPARATION DE LA COQUE INTERNE D'UN RESERVOIR COMPOSITE DE TYPE IV POUR LE STOCKAGE DE FLUIDE SOUS PRESSION**
VERFAHREN ZUR HERSTELLUNG DER INNENSCHALE EINES TYP-IV-KOMPOSITBEHÄLTERS ZUR SPEICHERUNG VON UNTER DRUCK STEHENDER FLÜSSIGKEIT
METHOD FOR PREPARING THE INTERNAL SHELL OF A COMPOSITE TYPE IV RESERVOIR FOR STORING PRESSURIZED FLUID

(30) Priorité: 15.04.2015 FR 1553338
(43) Date de publication de la demande: 21.02.2018
(73) Titulaire: Commissariat à l'Énergie Atomique et aux Énergies Alternatives, 75015 Paris (FR)
(72) Inventeur: NONY, Fabien, 37260 Monts (FR); POIDEVIN, Jean-Michel, 37260 Monts (FR); DELNAUD, Laurent, 37510 Ballan Mire (FR); DESPREZ, Bertrand, 37510 Villandry (FR); STEPHANY, Jean Rémi, 76600 Le Havre (FR)
(74) Mandataire: Brevalex
(86) Numéro de dépôt international: PCT/EP2016/058410
(87) Numéro de publication internationale: WO 2016/166326

(56) Documents cités:
- EP-A1- 0 550 951
- WO-A1-2011/047752
- WO-A1-2014/014049
- DE-A1-102010 023 386
- FR-A1- 2 948 167
- US-A1- 2007 029 701
- US-A1- 2011 210 475
- US-A1- 2012 138 616

## Description

### DOMAINE TECHNIQUE

La présente invention se rapporte à un procédé de préparation de la coque interne (ou enveloppe interne) d'un réservoir composite de type IV pour le stockage d'un fluide sous pression, tel que de l'hydrogène, de l'hélium ou du gaz naturel.

Cette invention trouve donc son application dans le domaine du stockage des fluides sous pression, tel que l'hydrogène, en vue notamment de l'alimentation de dispositifs de stockage d'énergie, tels que les piles à combustible, pouvant être destinés à alimenter des véhicules.

### ÉTAT DE LA TECHNIQUE ANTÉRIEURE

Concernant le stockage des fluides sous pression et, en particulier de l'hydrogène, quatre types principaux de réservoirs susceptibles d'accueillir des fluides sous pression ont été développés à ce jour :
- les réservoirs de « type I », qui sont entièrement métalliques ;
- les réservoirs de « type II », qui présentent une enveloppe métallique avec un frettage, par exemple, en fibres de verre, sur leur partie cylindrique ;
- les réservoirs de « type III », qui présentent une enveloppe structurante externe en matériau composite (fibres de verre ou fibres de carbone ou un autre renfort, tel que du basalte, des fibres d'aramide) et une coque ou enveloppe interne (dite aussi « liner ») métallique (par exemple, de l'aluminium ou de l'acier) ; et
- les réservoirs de « type IV », qui présentent une enveloppe externe en matériau composite à base de renfort fibreux (par exemple, fibres de verre ou fibres de carbone) et une enveloppe interne en matériau polymère ou coque interne (dénommée également, « liner »), pouvant permettre d'assurer le confinement du fluide et, en particulier, l'étanchéité. Cette coque interne peut être équipée d'une ou deux embases, le plus souvent, métalliques (par exemple, en acier ou en aluminium) permettant un raccordement à un dispositif de conversion d'énergie, un dispositif de remplissage ou un dispositif de vidange.

Pour les réservoirs de types I et II, et notamment ceux présentant une enveloppe en acier, les études sur la fragilisation de l'acier ont montré les limites de l'utilisation, en termes de durée de vie, des réservoirs métalliques pour le stockage de l'hydrogène. Qui plus est, le poids trop important de ce type de réservoirs ne permet pas d'envisager leur utilisation à haute pression dans des applications embarquées, telles que leur utilisation pour l'alimentation de véhicules.

Ce dernier inconvénient ne se rencontre pas avec les réservoirs de type III et IV, qui, de par l'utilisation de matériaux composites, pour constituer l'enveloppe se caractérisent par leur légèreté, sachant qu'un réservoir en matériau composite présente une masse inférieure de 25 à 75% à celle d'un réservoir en acier de même volume.

Aussi, cette caractéristique de légèreté rend les réservoirs de type IV à renfort carboné particulièrement attractifs pour être utilisés pour le stockage d'hydrogène pour des applications embarquées, ce qui n'exclut pas, pour autant, que ces réservoirs puissent être également utilisés pour des applications stationnaires ou transportables. De plus, les réservoirs de type IV peuvent présenter des coûts moindres, une excellente durabilité de leurs performances, notamment au regard du nombre de cycles de remplissage/vidange à haute pression en comparaison avec les réservoirs métalliques présentant fréquemment des problématiques de fissuration sous contrainte. Enfin, les réservoirs de type IV présentent la plus forte densité de stockage gravimétrique parmi les différentes familles de réservoirs gazeux sous pression à matériaux de renfort identiques.

Outre l'enveloppe externe en matériau composite et la coque interne en matériau polymère, les réservoirs de type IV peuvent comprendre également une ou deux embases métalliques positionnées au niveau des extrémités du réservoir, lesquelles embases remplissent, généralement, le rôle de connecteurs permettant un raccordement métallique à des dispositifs de remplissage et/ou de vidange et des dispositifs de conversion d'énergie. La liaison entre la coque interne et la ou les embases métalliques constitue une liaison particulièrement critique au regard du confinement d'un gaz, ceci étant d'autant plus avéré pour les gaz, dont la molécule est petite et donc fortement perméante, tel que cela est le cas de l'hélium ou de l'hydrogène.

Il s'avère donc que la gestion de cette liaison en termes de performances et de durabilité constitue donc un enjeu primordial dans le design des réservoirs pour le stockage gazeux sous pression dans le but de garantir leur étanchéité sur l'ensemble de leur plage de fonctionnement.

Compte tenu des objectifs de coûts et de performance à froid requises pour le réservoir et notamment pour le matériau constitutif de la coque interne, les polyoléfines et, plus spécifiquement, les polyéthylènes constituent des candidats de choix pour la constitution de la coque interne mais présentent, toutefois, pour caractéristique d'être difficilement collables et de présenter une faible adhérence sur les matériaux métalliques classiquement utilisés pour constituer les embases (par exemple, aluminium, aciers et plus spécifiquement, aciers inoxydables), que ces embases présentent une surface lisse voire même une surface traitée mécaniquement (par exemple, par ponçage ou sablage).

Aussi, pour obtenir une adhésion forte et durable entre l'embase et la coque interne, il est le plus souvent nécessaire de recourir à des traitements chimiques contraignants et coûteux, tels que :
- des traitements de l'embase par des acides, tels que l'acide nitrique, l'acide phosphorique ;
- des traitements d'anodisation phosphorique ou chromique, lorsque l'embase est en aluminium ;
- des traitements de phosphatation, lorsque l'embase est en acier.

Ensuite, sur ces surfaces décapées et/ou anodisées, des primaires d'adhésion peuvent être également appliqués pour garantir une bonne adhésion ultérieure et/ou des propriétés additionnelles comme la résistance à la corrosion.

En parallèle des solutions de traitement de surface, il a été développé des polymères modifiés dérivés de polymères standards et, plus spécifiquement, des polymères greffés, dont les greffons permettent, notamment, de créer des liaisons chimiques, par exemple, de nature covalente, avec les surfaces métalliques. Toutefois, ces polymères sont, en moyenne, 10 fois plus chers que les polymères standards, dont ils sont dérivés, ce qui les rend peu compétitifs pour constituer l'intégralité de la coque interne, et présentent l'inconvénient d'être difficilement transformables, du fait de leur propension à coller fortement à toutes les surfaces (telles que les surfaces des moules).

En variante, WO 2014/014049 décrit des réservoirs sous pression, dont l'embase est constituée en partie d'une pièce plastique, qui entoure d'emblée les parties métalliques de la pièce.

Au vu de ce qui précède, les auteurs se sont donc fixé pour objectif de proposer un procédé de fabrication de la coque interne d'un réservoir composite de type IV permettant d'obtenir une bonne interface entre la ou les embases métalliques et le matériau constitutif de la coque interne du réservoir, l'adhésion entre la ou les embases et la coque interne devant être suffisamment élevée pour s'affranchir des problèmes de décollement lors des sollicitations en service. Le procédé se doit également d'être de mise en œuvre simple et peu coûteuse.

### EXPOSÉ DE L'INVENTION

Ainsi, l'invention a trait à un procédé de fabrication d'une coque interne d'un réservoir composite de type IV délimitant une cavité interne destinée à accueillir un fluide sous pression et comprenant au moins une embase métallique permettant la connexion entre ladite cavité interne et l'extérieur de la coque interne, ladite ou lesdites embase(s) étant solidaire(s) de la coque interne, ledit procédé comprenant les étapes suivantes :
a) une étape de dépôt d'au moins une couche adhérente d'un premier polymère sur la ou les parties de la ou les embase(s) métallique(s) destinée(s) à être en contact direct avec le matériau constitutif de la coque interne, ledit premier polymère étant un polymère comprenant des groupes aptes à adhérer à une surface métallique par formation de liaisons covalentes, lesdits groupes étant choisis parmi les groupes anhydride maléique, les groupes silanes, les groupes silanols, les groupes acryliques, les groupes peroxydes et les mélanges de ceux-ci;
b) une étape d'intégration de ladite ou lesdites embase(s) ainsi revêtue(s) dans un moule dont la cavité interne est de forme correspondante à la forme de la coque interne que l'on souhaite obtenir;
c) une étape de formation sur la paroi interne du moule et sur la partie ou les parties de la ou les embase(s) destinée(s) à être en contact avec le matériau constitutif de la coque interne, d'au moins une couche d'un deuxième polymère différent dudit premier polymère et adhérant au premier polymère, formant ainsi la coque interne susmentionnée équipée de la ou les embases susmentionnées, ledit deuxième polymère étant un polymère comprenant une partie de ses motifs répétitifs identiques à ceux du premier polymère.

Avant d'entrer plus en avant dans la description de l'invention, nous précisons les définitions suivantes.

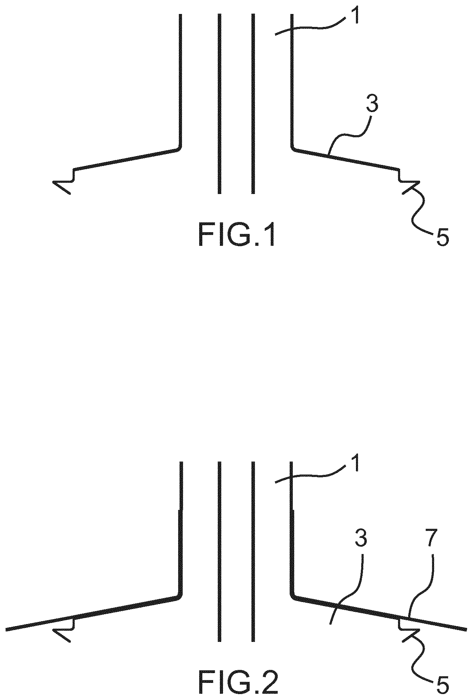

Par embase métallique, on entend, dans ce qui précède et ce qui suit, une pièce ou insert métallique qui peut permettre la jonction ou la connexion entre la cavité interne de la coque interne et l'extérieur de celle-ci, cette pièce pouvant permettre le remplissage de la cavité interne, par exemple, par un fluide sous pression, et/ou la vidange de cette cavité interne. D'un point de vue structural, il peut s'agir d'une pièce métallique comportant un corps cylindrique creux ouvert à ses extrémités, lorsqu'elle est débouchante, une de ses extrémités étant terminée par une collerette munie ou non d'une zone d'ancrage mécanique, telle qu'un bourrelet, à sa périphérie, une telle embase étant illustrée, en coupe transversale, sur la figure 1 jointe en annexe, dans laquelle les références 1, 3, 5 représentent respectivement le corps cylindrique creux, la collerette et le bourrelet. Dans cette configuration, le bourrelet constitue la partie destinée à être en contact direct avec le matériau constitutif de la coque interne.

La présente invention résulte d'un double choix, le choix d'un premier polymère apte à adhérer à la surface de l'embase métallique pour la réalisation de l'étape a) susmentionnée et le choix d'un deuxième polymère apte à adhérer au premier polymère recouvrant l'embase pour constituer la coque interne pour la réalisation de l'étape b) susmentionnée.

Le fait de limiter l'utilisation d'un polymère apte à adhérer à la surface de l'embase métallique (tel qu'un polymère fonctionnalisé de manière appropriée pour adhérer à une surface métallique) uniquement pour recouvrir l'embase et non pour constituer l'intégralité de la coque interne peut permettre de limiter les coûts, car il est classiquement admis que les polymères adhérant aux surfaces métalliques sont plus coûteux que des polymères pouvant être utilisés pour utiliser le matériau de la coque interne.

Qui plus est, le fait de recouvrir préalablement la ou les parties de l'embase métallique destinées à être en contact avec la coque, avec un polymère adhérant améliore considérablement la qualité et la durabilité ou résistance de l'interface entre cette embase et la coque interne, du fait de la capacité des polymères à être généralement compatibles entre eux.

Selon l'invention, le procédé comprend, en premier lieu, une étape de dépôt d'une couche adhérente d'un premier polymère sur la ou les parties de la ou les embase(s) métallique(s) destinées à être en contact direct avec le matériau constitutif de la coque interne.

On précise que, par couche adhérente d'un premier polymère, on entend une couche constituée par ledit premier polymère, lequel comprend des groupes aptes à adhérer par formation de liaisons covalentes à une surface métallique (en l'occurrence, ici, la surface de l'embase métallique), l'adhésion se faisant par la formation de liaisons covalentes entre lesdits groupes et ladite surface métallique. Ceci implique qu'il n'est plus nécessaire de déposer une autre couche de matériau (par exemple, une couche d'adhésif) entre l'embase métallique et la couche de premier polymère pour réaliser un assemblage performant. En d'autres termes, la couche adhérente du premier polymère est directement en contact avec la surface de la ou les embases métalliques.

De manière générale, il peut s'agir de tous groupes susceptibles de générer des liaisons covalentes avec des espèces présentes à la surface de la ou les embases métalliques.

De tels groupes sont choisis notamment parmi les groupes anhydride maléique, les groupes silanes, les groupes silanols, les groupes acryliques, les groupes peroxydes et les mélanges de ceux-ci.

Plus spécifiquement, le premier polymère peut être un polymère comprenant une chaîne principale comprenant un premier motif répétitif issu de la polymérisation d'un monomère éthylénique et comprenant un deuxième motif répétitif comprenant une chaîne pendante comprenant au moins un groupe apte à adhérer à une surface métallique, ce groupe pouvant être choisi parmi ceux listés ci-dessus.

Plus spécifiquement encore, le premier polymère peut être un polymère appartenant à la famille des polyéthylènes, et plus précisément un polymère comprenant un motif répétitif éthylène et un motif répétitif dérivé dudit motif répétitif éthylène comprenant une chaîne pendante comportant au moins un groupe apte à adhérer à une surface métallique, ce groupe pouvant être choisi parmi ceux listés ci-dessus.

Un tel polymère peut être représenté par la formule générale suivante : 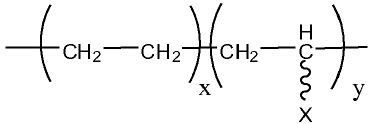 dans laquelle x et y représentent les nombres de répétition des motifs répétitifs pris entre parenthèses, la liaison ondulée représentant une chaîne pendante liée, de manière covalente, au groupe -CH-, à laquelle est (sont) lié(s) un ou plusieurs groupes X aptes à adhérer à une surface métallique, tels que ceux listés ci-dessus. Par mesure de simplicité de représentation, un seul groupe X a été représenté sur cette formule.

En variante, il peut s'agir d'un premier polymère comprenant une chaîne principale comprenant un premier motif répétitif issu de la polymérisation d'un monomère éthylénique et comprenant, à au moins l'une des extrémités de la chaîne principale, une fonction téléchélique.

L'étape de dépôt susmentionnée peut être réalisée par différentes techniques de dépôt, parmi lesquelles on peut citer, de manière non exhaustive, la technique de dépôt par poudrage manuel, la technique par dépôt de peinture électrostatique et la technique de dépôt en lit fluidisé.

Selon la technique de dépôt par poudrage manuel, il est, classiquement, mis en œuvre les opérations suivantes :
- une opération de chauffage de la ou les embases métalliques à une température au moins égale à la température de fusion d'une poudre du premier polymère ;
- une opération de mise en contact de la ou les embases ainsi chauffées avec une poudre dudit premier polymère, moyennant quoi celle-ci adhère à la surface de la ou les embases métalliques formant ainsi une couche recouvrant ladite ou lesdites embases métalliques, cette opération de mise en contact pouvant être répétée une ou plusieurs fois jusqu'à obtention d'une couche d'épaisseur souhaitée.

Entre deux opérations de mise en contact, le cas échéant, la ou les embases peuvent être maintenues à une température au moins égale à ladite température de fusion susmentionnée, en plaçant la ou lesdites embases dans une étuve chauffée à la température adéquate.

Selon la technique par dépôt de peinture électrostatique, il s'entend que la peinture électrostatique comprend une dispersion de poudre du premier polymère, cette peinture pouvant être appliquée par projection sur la ou les embases d'une ou plusieurs couches de peinture. En deux dépôts de couche, le cas échéant et/ou à la fin de l'étape de dépôt de peinture, la ou les embases peuvent être maintenues à une température au moins égale à la température de fusion susmentionnée (c'est-à-dire celle de la poudre contenue dans la dispersion), en plaçant la ou lesdites embases dans une étuve chauffée à la température adéquate.

Enfin, selon la technique du dépôt en lit fluidisé, la ou les embases métalliques préalablement chauffées, généralement, à une température au moins égale à la température de fusion d'une poudre du premier polymère, est (sont) introduite(s), classiquement, dans un réceptacle contenant ladite poudre mise en mouvement par un flux de gaz introduit à la base du réceptacle. Les particules de poudre entrant en contact avec la surface de la ou les embases métalliques chauffées fondent, moyennant quoi elles adhérent à cette surface en formant une couche d'épaisseur croissante.

Avant l'étape de mise en œuvre de l'étape a), le procédé de l'invention peut comporter une étape de masquage de la ou les parties de l'embase, pour ne pas les revêtir par une couche du premier polymère (cette ou ces parties constituant ultérieurement la ou les parties de l'embase qui ne seront pas en contact direct avec le matériau constitutif de la coque interne). Plus spécifiquement, cette étape de masquage peut consister à recouvrir la ou lesdites parties susmentionnées, par exemple, par une pièce plastique isolante, comme un scotch résistant à la chaleur (par exemple, jusqu'à une température de 200°C, comme cela peut être le cas du téflon ou d'un polyimide) ou par tout autre moyen, qui préviendrait le dépôt d'une couche du premier polymère dans les zones non prévues (notamment, celles destinées à être en contact direct avec les parois du moule). Lorsque l'embase comporte une ou plusieurs ouverture(s), par exemple, sous forme d'un alésage ou d'un filetage, celle(s)-ci peuvent être obturées, avant la mise en œuvre de l'étape a), par un bouchon, par exemple, en téflon.

Avant la mise en œuvre de l'étape a) et les éventuelles étapes de masquage et d'obturation, la ou les embases métalliques peuvent être, avantageusement, soumises à une étape de nettoyage ou dégraissage, par exemple, avec un solvant organique, tel que l'acétone.

En variante, il pourrait être envisageable d'anodiser la surface de l'embase métallique, notamment lorsque celle-ci est en aluminium, de sorte à ce que les oxydes présents en surface soient bien cohésifs ou à créer une structuration spécifique de la surface visant à améliorer encore l'assemblage.

Après l'étape de mise en œuvre de l'étape a), le procédé comprend une étape b) d'introduction de ladite ou lesdites embase(s) ainsi revêtue(s) dans un moule dont la cavité interne est de forme correspondante à la forme de la coque interne que l'on souhaite obtenir, cette étape b) étant directement suivie d'une étape de dépôt c) sur la paroi interne du moule et sur la partie ou les parties de la ou embase(s) destinées à être en contact avec le matériau de la coque interne, d'au moins une couche d'un deuxième polymère différent dudit premier polymère et adhérant au premier polymère, formant ainsi la coque susmentionnée solidaire de la ou les embases métalliques.

Lorsque l'embase métallique est de géométrie similaire à celle illustrée par la figure 1, l'introduction dans le moule peut être effectuée de sorte à ce que la collerette soit directement en contact avec la paroi du moule et à ce que le corps cylindrique creux traverse une ouverture du moule présentant un diamètre permettant l'introduction du corps cylindrique via cette ouverture. La figure 2 illustre la partie d'un moule montrant l'embase ainsi introduite, les références 1, 3, 5 et 7 illustrant respectivement le corps cylindrique creux de l'embase, la collerette, le bourrelet et la paroi du moule en contact direct avec la collerette.

La formation de la coque peut se faire par des procédés classiques de moulage et, de préférence, par rotomoulage.

Le rotomoulage comprend classiquement les opérations suivantes :
i) après introduction, dans le moule, de la ou les embases traitées selon l'étape a) du procédé, une opération de remplissage de la cavité interne du moule par une poudre du deuxième polymère ;
ii) une opération de chauffage du moule jusqu'à une température au moins égale à la température de fusion du deuxième polymère ;
iii) de manière concomitante à l'étape ii), une opération de rotation du moule, générant ainsi un dépôt sur la paroi interne du moule et sur les parties de la ou les embases émergeant dans la cavité interne du moule, moyennant quoi l'on obtient une coque de forme correspondant à la géométrie interne du moule ;
iV) éventuellement, une étape de réitération des étapes i) à iii), dans le but de réaliser plusieurs couches du deuxième polymère, en vue d'obtenir une épaisseur plus importante ;
ivi) éventuellement, une ou plusieurs étapes de réitération des étapes i) à iii) mais avec une poudre d'un autre polymère différent du deuxième polymère en vue de combiner les propriétés du deuxième polymère et de l'autre polymère (par exemple, pour former une structure tricouche) ;
ivii) une opération de refroidissement pour solidifier le dépôt ou les dépôts.

En particulier, l'opération de rotation du moule peut s'effectuer, avantageusement, autour de deux axes de rotation généralement perpendiculaires, en vue de provoquer un dépôt uniforme du deuxième polymère sur la paroi interne du moule et sur les parties de la ou les embases émergeant dans la cavité interne du moule.

Ce deuxième polymère doit être apte à adhérer au premier polymère.

On précise que, par couche adhérente d'un deuxième polymère, on entend une couche constituée par ledit deuxième polymère, lequel comprend des groupes aptes à adhérer à la surface de la couche du premier polymère, par exemple, par interdiffusion des chaînes polymères à l'interface. Ceci implique que l'on n'interpose pas pour l'adhérence une autre couche (par exemple, une couche d'adhésif) entre la couche de premier polymère et la couche de deuxième polymère. En d'autres termes, la couche du deuxième polymère est directement en contact avec la surface de la couche de premier polymère.

Le deuxième polymère peut être un polymère thermoplastique et plus spécifiquement un polymère appartenant à la famille des polyéthylènes, c'est-à-dire comprenant un motif répétitif éthylène, ce qui n'exclut pas qu'ils puissent contenir d'autres motifs répétitifs. A titre d'exemple, il peut s'agir de polyéthylènes standards, c'est-à-dire des polyéthylènes linéaires ou ramifiés, par exemple, ne comprenant qu'un seul motif répétitif éthylène.

Le deuxième polymère peut être également un polymère appartenant à la famille des polyamides, tels qu'un polyamide-12 ou un polyamide-11.

De préférence, ce deuxième polymère est, avantageusement, un polymère comprenant une partie de ses motifs répétitifs identiques à ceux du premier polymère.

Par exemple, lorsque le premier polymère appartient à la famille des polyéthylènes, et plus précisément un polymère comprenant un motif répétitif éthylène et un motif répétitif dérivé dudit motif répétitif éthylène comprenant une chaîne pendante comportant au moins un groupe apte à adhérer à une surface métallique, le deuxième polymère pourra être un polymère comprenant uniquement un seul motif répétitif, qui est un motif éthylène (auquel cas le deuxième polymère est un polyéthylène). De ce fait, le deuxième polymère adhère parfaitement à la couche de premier polymère déposée sur la ou les embases par un mécanisme d'auto-adhésion ou d'interdiffusion des chaînes polymères compte tenu, notamment, des températures mises en jeu. Ce mécanisme d'auto-adhésion ou d'interdiffusion peut également se rencontrer lorsque le premier polymère et le deuxième polymère ne comporte pas de motif(s) répétitif(s) identiques, sous réserve que ceux-ci soient compatibles.

Une fois l'étape c) mise en œuvre, le procédé de l'invention comprend, classiquement, une étape de démoulage de la coque interne des parois du moule éventuellement à l'aide d'un agent démoulant, lequel aura été préalablement appliqué sur la surface interne du moule (c'est-à-dire avant l'étape de formation de la coque interne). L'agent démoulant peut être, par exemple, un produit en phase aqueuse déposé au pinceau puis lustré et cuit dans le moule, formant ainsi une couche sur la surface interne du moule. Il peut s'agir des produits commerciaux fournis par Chem-trend®, tels que les produits de la gamme Chemlease® ou fournis par Loctite®, tels que les produits de la gamme Frekote® ou encore par Elgadi Chemicals, tels que les produits de la gamme Elkoat®. Ces agents démoulants peuvent être qualifiés d'agents démoulants semi-permanents, car ils nécessitent un remplacement à l'issue de la réalisation d'un certain nombre de coques internes (par exemple, pour un nombre de coques allant de 10 à plus de 100).

L'agent démoulant peut consister également en un agent démoulant permanent, un tel agent pouvant consister en une couche déposée sur la surface interne du moule en un matériau choisi parmi le téflon, le nickel, la ballinite®, cette couche pouvant être stable pour la réalisation d'au moins 1000 coques.

Une fois la coque interne munie de sa ou ses embases, pour obtenir un réservoir de type IV, il est nécessaire d'envelopper, en vue de son renforcement, la coque interne obtenue préalablement par un matériau composite à renfort fibreux, lequel va permettre d'assurer la tenue mécanique sous pression du réservoir.

Aussi, l'invention a trait, au final, à un procédé de préparation d'un réservoir composite de type IV comprenant les étapes suivantes :
- une étape de mise en œuvre du procédé de préparation d'une coque interne d'un réservoir composite de type IV tel que défini ci-dessus ; et
- une étape de dépôt, sur la surface externe de la coque ainsi obtenue à l'étape précédente, d'un matériau fibreux pour former l'enveloppe externe du réservoir.

Cette étape de dépôt peut être réalisée, notamment, par enroulement filamentaire de fibres continues imprégnées d'une résine sur la surface externe de la coque interne, moyennant quoi l'on forme le matériau composite à renfort fibreux.

D'autres caractéristiques et avantages de l'invention ressortiront du complément de description qui suit.

Il va de soi, toutefois, que ce complément de description n'est donné qu'à titre d'illustration de l'objet de l'invention et ne constitue en aucune manière une limitation de cet objet.

### BREVE DESCRIPTION DES FIGURES

La figure 1 est une représentation, en coupe transversale, d'une embase utilisable dans le cadre de la mise en œuvre du procédé de l'invention.
La figure 2 est une représentation, en coupe transversale, d'une embase telle que celle définie à la figure 1 positionnée dans un moule utilisable dans le cadre de la mise en œuvre du procédé de l'invention.

### EXPOSE DE MODES DE REALISATION PARTICULIERS

### EXEMPLE 1

Dans cet exemple, il est illustré la préparation d'une coque interne de réservoir à stockage de fluide sous pression comprenant une embase en aluminium.

Pour ce faire, l'on procède, dans un premier temps, au recouvrement, par poudrage manuel, de la partie de l'embase qui sera directement en contact avec le matériau de la coque, avec un polyéthylène greffé du type Matrix N211 (à savoir, un polyéthylène dont les greffons comprennent des groupes anhydride maléique). Cette embase est de facture similaire à celle illustrée sur la figure 1 jointe en annexe.

Plus spécifiquement, pour cette étape, l'embase métallique est préchauffée à une température de 160°C suivi de 2 passages successifs de l'embase dans un récipient comprenant une poudre du polyéthylène greffé susmentionné, chacun de ces passages étant séparé par un passage de l'embase pendant 3 minutes dans une étuve à 160°C. L'embase est ainsi recouverte d'une couche présentant une épaisseur d'environ 0,8 mm.

Ensuite, dans un deuxième temps, l'embase ainsi revêtue est placée dans un moule de rotomoulage, dont on remplit la cavité interne avec un polyéthylène standard (c'est-à-dire un polyéthylène ne comprenant que le seul motif répétitif éthylène) du type Matrix 6402 U. Le moule est ensuite soumis à une rotation sur deux axes orthogonaux et porté à une température de 210°C (température maximale enregistrée de l'air à l'intérieur du moule pendant le cycle de fabrication), moyennant quoi l'on obtient une coque en polyéthylène solidaire de l'embase, qui permet une communication entre la cavité interne de la coque et l'extérieur. L'ensemble formé par la coque et l'embase présente une excellente tenue, c'est-à-dire qu'il n'y a pas de phénomènes de décohésion entre la surface de l'embase et le polyéthylène greffé et entre le polyéthylène greffé et le polyéthylène standard.

Cet assemblage embase/coque interne peut être soumis à des couples de torsion supérieurs à 100 Nm, sans que la liaison ne soit altérée. Une coupe transversale de l'assemblage ne permet pas non plus de mettre à défaut cet assemblage. Le cyclage en pression d'un réservoir comprenant cet assemblage ne révèle pas non plus de décohésion.

### EXEMPLE 2

Dans cet exemple, il est illustré la préparation d'une coque interne de réservoir à stockage de fluide sous pression comprenant une embase en aluminium.

Pour ce faire, l'on procède, dans un premier temps, au recouvrement, par poudrage manuel, de la partie de l'embase qui sera directement en contact avec le matériau de la coque, avec un polyéthylène greffé du type Matrix N211 (à savoir, un polyéthylène dont les greffons comprennent des groupes anhydride maléique).

Plus spécifiquement, pour cette étape, l'embase métallique est préchauffée à une température de 160°C suivi de 2 passages successifs de l'embase dans un récipient comprenant une poudre du polyéthylène greffé susmentionné, chacun de ces passages étant séparé par un passage de l'embase pendant 3 minutes dans une étuve à 160°C. L'embase est ainsi recouverte d'une couche présentant une épaisseur d'environ 0,8 mm.

Ensuite, dans un deuxième temps, l'embase ainsi revêtue est placée dans un moule de rotomoulage, dont on remplit la cavité interne avec un polyéthylène réticulable type Matrix XL400 (à savoir, un polyéthylène comportant un agent réticulant du type peroxyde permettant d'initier la réaction de réticulation à une température approximative de 150°C). Le moule est ensuite soumis à une rotation, moyennant quoi l'on obtient une coque en polyéthylène réticulé solidaire de l'embase, qui permet une communication entre la cavité interne de la coque et l'extérieur. L'ensemble formé par la coque et l'embase présente une excellente tenue, c'est-à-dire qu'il n'y a pas de phénomènes de décohésion entre la surface de l'embase et le polyéthylène greffé et entre le polyéthylène greffé et le polyéthylène réticulé.

### EXEMPLE 3

Dans cet exemple, il est illustré la préparation d'une coque interne de réservoir à stockage de fluide sous pression comprenant une embase en aluminium.

Pour ce faire, l'on procède, dans un premier temps, au recouvrement, par poudrage manuel, de la partie de l'embase qui sera directement en contact avec le matériau de la coque, avec une polyoléfine greffée du type XP 9015 comportant des greffons spécifiques aptes à augmenter l'adhésion et compatible avec des polyamides, tel qu'un polyamide-12

Plus spécifiquement, pour cette étape, l'embase métallique est préchauffée à une température de 160°C suivi de 2 passages successifs de l'embase dans un récipient comprenant une poudre de la polyoléfine greffée susmentionnée, chacun de ces passages étant séparé par un passage de l'embase pendant 3 minutes dans une étuve à 160°C. L'embase est ainsi recouverte d'une couche présentant une épaisseur d'environ 0,8 mm.

Ensuite, dans un deuxième temps, l'embase ainsi revêtue est placée dans un moule de rotomoulage, dont on remplit la cavité interne avec une quantité de poudre micronisée en polyamide-12, par exemple, de type Rilsan® ou Matrix ARVO950 adaptée à l'épaisseur souhaitée. Le moule est ensuite soumis à une rotation et porté à une température maximale de 210°C puis refroidi, moyennant quoi l'on obtient une coque en polyamide-12 solidaire de l'embase, qui permet une communication entre la cavité interne de la coque et l'extérieur. L'ensemble formé par la coque et l'embase présente une excellente tenue, c'est-à-dire qu'il n'y a pas de phénomènes de décohésion entre la surface de l'embase et le polymère greffé XP9015 et entre le polymère greffé XP9015 et le polyamide-12.

### EXEMPLE 4

Dans cet exemple, il est illustré la préparation d'une coque interne de réservoir à stockage de fluide sous pression comprenant une embase en aluminium.

Pour ce faire, l'on procède, dans un premier temps, au recouvrement, par poudrage manuel, de la partie de l'embase qui sera directement en contact avec le matériau de la coque, avec un polyéthylène métallocène greffé du type Lumicène mPE3671.

Plus spécifiquement, pour cette étape, l'embase métallique est préchauffée à une température de 160°C suivi de 2 passages successifs de l'embase dans un récipient comprenant une poudre du polyéthylène greffé susmentionné, chacun de ces passages étant séparé par un passage de l'embase pendant 3 minutes dans une étuve à 160°C. L'embase est ainsi recouverte d'une couche présentant une épaisseur d'environ 0,8 mm.

Ensuite, dans un deuxième temps, l'embase ainsi revêtue est placée dans un moule de rotomoulage, dont on remplit une partie de la cavité interne avec un polyamide-11 et porté à environ 220°C. Le moule est ensuite soumis à une rotation, moyennant quoi l'on obtient une coque en polyamide-11 solidaire à l'embase, qui permet une communication entre la cavité interne de la coque et l'extérieur. L'ensemble formé par la coque et l'embase est présente une excellente tenue, c'est-à- dire qu'il n'y a pas de phénomènes de décohésion entre la surface de l'embase et le polyéthylène greffé et entre le polyéthylène greffé et le polyamide-11.

### EXEMPLE COMPARATIF 1

Dans cet exemple, il est illustré la préparation d'une coque interne de réservoir à stockage de fluide sous pression comprenant une embase en aluminium.

Pour ce faire, l'on procède, dans un premier temps, au dégraissage de l'embase en aluminium, celle-ci n'étant pas revêtu d'un polymère adhérent, tel que cela est le cas dans le procédé de l'invention.

Ensuite, dans un deuxième temps, l'embase est placée dans un moule de rotomoulage, dont on remplit la cavité interne avec un polyéthylène standard (c'est-à-dire un polyéthylène ne comprenant qu'un seul motif répétitif éthylène) du type Matrix 6402 U. Le moule est ensuite soumis à une rotation sur deux axes orthogonaux et porté à une température de 210°C (température maximale enregistrée de l'air à l'intérieur du moule pendant le cycle de fabrication), moyennant quoi l'on obtient une coque en polyéthylène solidaire de l'embase, qui permet une communication entre la cavité interne de la coque et l'extérieur.

Après refroidissement, on constate, sur une partie d'environ 800 mm de longueur, une décohésion de l'embase métallique avec le polymère constitutif de la coque induit par le retrait thermique du polymère.

L'analyse visuelle révèle, que les deux surfaces sont totalement lisses et l'absence totale d'adhésion.

## Revendications

1. Procédé de fabrication d'une coque interne d'un réservoir composite de type IV délimitant une cavité interne destinée à accueillir un fluide sous pression et comprenant au moins une embase métallique permettant la connexion entre ladite cavité interne et l'extérieur de la coque interne, ladite ou lesdites embase(s) étant solidaire(s) de la coque interne, ledit procédé comprenant les étapes suivantes :
a) une étape de dépôt d'au moins une couche adhérente d'un premier polymère sur la ou les parties de la ou les embase(s) métallique(s) destinée(s) à être en contact direct avec le matériau constitutif de la coque interne, ledit premier polymère étant un polymère comprenant des groupes aptes à adhérer à une surface métallique par formation de liaisons covalentes, lesdits groupes étant choisis parmi les groupes anhydride maléique, les groupes silanes, les groupes silanols, les groupes acryliques, les groupes peroxydes et les mélanges de ceux-ci ;
b) une étape d'intégration de ladite ou lesdites embase(s) ainsi revêtue(s) dans un moule dont la cavité interne est de forme correspondante à la forme de la coque interne que l'on souhaite obtenir ;
c) une étape de formation sur la paroi interne du moule et sur la partie ou les parties de la ou les embase(s) destinée(s) à être en contact avec le matériau constitutif de la coque interne, d'au moins une couche d'un deuxième polymère différent dudit premier polymère et adhérant au premier polymère, formant ainsi la coque interne susmentionnée équipée de la ou les embases susmentionnées, ledit deuxième polymère étant un polymère comprenant une partie de ses motifs répétitifs identiques à ceux du premier polymère.

2. Procédé selon la revendication 1, dans lequel le premier polymère est un polymère comprenant une chaîne principale comprenant un premier motif répétitif issu de la polymérisation d'un monomère éthylénique et comprenant un deuxième motif répétitif comprenant une chaîne pendante comprenant au moins un groupe apte à adhérer à une surface métallique tel que défini à la revendication 1.

3. Procédé selon l'une quelconque des revendications précédentes, dans lequel le premier polymère est un polymère appartenant à la famille des polyéthylènes.

4. Procédé selon la revendication 1 ou 2, dans lequel le premier polymère est un polymère comprenant un motif répétitif éthylène et un motif répétitif dérivé dudit motif répétitif éthylène comprenant une chaîne pendante comportant au moins un groupe apte à adhérer à une surface métallique, ce groupe étant choisi parmi ceux listés à la revendication 1 .

5. Procédé selon l'une quelconque des revendications précédentes, dans lequel l'étape de dépôt a) est réalisée par la technique de dépôt par poudrage manuel, la technique par dépôt de peinture électrostatique ou la technique de dépôt en lit fluidisé.

6. Procédé selon l'une quelconque des revendications précédentes, dans lequel l'étape c) est réalisée par rotomoulage.

7. Procédé selon l'une quelconque des revendications précédentes, dans lequel le deuxième polymère est un polymère thermoplastique.

8. Procédé selon l'une quelconque des revendications précédentes, dans lequel le deuxième polymère est un polymère appartenant à la famille des polyéthylènes ou à la famille des polyamides.

9. Procédé selon la revendication 8, dans lequel, lorsque le deuxième polymère est un polymère appartenant à la famille des polyéthylènes, il est un polyéthylène linéaire ou ramifié.

10. Procédé selon la revendication 8, dans lequel, lorsque le deuxième polymère est un polymère appartenant à la famille des polyamides, il s'agit d'un polyamide-11 ou d'un polyamide-12.

11. Procédé de préparation d'un réservoir composite de type IV comprenant les étapes suivantes :
- une étape de mise en oeuvre du procédé de préparation d'une coque interne d'un réservoir composite de type IV tel que défini selon l'une quelconque des revendications 1 à 10 ; et
- une étape de dépôt, sur la surface externe de la coque ainsi obtenue à l'étape précédente, d'un matériau fibreux pour former l'enveloppe externe du réservoir.

## Patentansprüche

1. Verfahren zur Herstellung einer Innenschale eines Kompositbehälters vom Typ IV, der einen inneren Hohlraum begrenzt, der dazu ausgelegt ist, ein Fluid unter Druck aufzunehmen, und der wenigstens einen metallischen Sockel umfasst, der die Verbindung zwischen dem inneren Hohlraum und dem Äußeren der Innenschale ermöglicht, wobei der oder die Sockel mit der Innenschale verbunden ist/sind, wobei das Verfahren die folgenden Schritte umfasst:
a) einen Schritt des Aufbringens wenigstens einer haftenden Schicht eines ersten Polymers auf den Teil oder die Teile des oder der metallischen Sockel(s), der/die dazu ausgelegt ist/sind, in direktem Kontakt mit dem Material zu sein, das die Innenschale bildet, wobei das erste Polymer ein Polymer ist, das Gruppen umfasst, die dazu ausgelegt sind, an einer metallischen Oberfläche durch Bildung von kovalenten Bindungen zu haften, wobei die Gruppen ausgewählt sind aus den Maleinanhydridgruppen, den Silangruppen, den Silanolgruppen, den Acrylgruppen, den Peroxidgruppen und deren Mischungen;
b) einen Schritt des Integrierens des oder der derart beschichteten Sockel(s) in eine Form, deren innerer Hohlraum eine Form entsprechend der Form der Innenschale hat, die man erhalten möchte;
c) einen Schritt des Bildens, auf der Innenwand der Form und auf dem Teil oder den Teilen des oder der Sockel(s), der/die dazu ausgelegt ist/sind, in Kontakt mit dem Material zu sein, das die Innenschale bildet, von wenigstens einer Schicht eines zweiten Polymers, das von dem ersten Polymer verschieden ist und an dem ersten Polymer haftet, wodurch somit die genannte Innenschale gebildet wird, die mit dem oder den genannten Sockel(n) ausgestattet ist, wobei das zweite Polymer ein Polymer ist, umfassend einen Teil seiner sich wiederholenden Motive identisch zu jenen des ersten Polymers.

2. Verfahren nach Anspruch 1, bei dem das erste Polymer ein Polymer ist, das eine Hauptkette umfasst, die ein erstes sich wiederholendes Motiv umfasst, das von der Polymerisation eines ethylenischen Monomers stammt, und ein zweites sich wiederholendes Motiv umfasst, das eine hängende Kette umfasst, die wenigstens eine Gruppe umfasst, die dazu ausgelegt ist, an einer metallischen Oberfläche wie in Anspruch 1 definiert zu haften.

3. Verfahren nach einem der vorhergehenden Ansprüche, bei dem das erste Polymer ein Polymer ist, das zur Familie der Polyethylene gehört.

4. Verfahren nach Anspruch 1 oder 2, bei dem das erste Polymer ein Polymer ist, das ein sich wiederholendes ethylenisches Motiv und ein sich wiederholendes Motiv umfasst, das von dem sich wiederholenden ethylenischen Motiv abgeleitet ist, umfassend eine hängende Kette, die wenigstens eine Gruppe umfasst, die dazu ausgelegt ist, an einer metallischen Oberfläche zu haften, wobei diese Gruppe aus jenen ausgewählt ist, die in Anspruch 1 aufgelistet sind.

5. Verfahren nach einem der vorhergehenden Ansprüche, bei dem der Schritt des Aufbringens a) durch die Aufbringungstechnik mittels manueller Pulverbeschichtung realisiert wird, durch die Aufbringungstechnik der elektrostatischen Lackierung oder die Aufbringungstechnik im Fluidbett.

6. Verfahren nach einem der vorhergehenden Ansprüche, bei dem der Schritt c) durch Rotationsformen realisiert wird.

7. Verfahren nach einem der vorhergehenden Ansprüche, bei dem das zweite Polymer ein thermoplastisches Polymer ist.

8. Verfahren nach einem der vorhergehenden Ansprüche, bei dem das zweite Polymer ein Polymer ist, das zur Familie der Polyethylene oder zur Familie der Polyamide gehört.

9. Verfahren nach Anspruch 8, bei dem dann, wenn das zweite Polymer ein Polymer ist, das zur Familie der Polyethylene gehört, es ein lineares oder verzweigtes Polyethylen ist.

10. Verfahren nach Anspruch 8, bei dem dann, wenn das zweite Polymer ein Polymer ist, das zur Familie der Polyamide gehört, es sich um ein Polyamid-11 oder ein Polyamid-12 handelt.

11. Verfahren zur Herstellung eines Kompositbehälters vom Typ IV, umfassend die folgenden SChrite:
- einen Schritt der Durchführung des Verfahrens zur Herstellung einer Innenschale eines Kompositbehälters vom Typ IV wie in einem der Ansprüche 1 bis 10 definiert; und
- einen Schritt des Aufbringens eines Fasermaterials auf die äußere Oberfläche der im vorhergehenden Schritt somit erhaltenen Schale, um die äußere Umhüllung des Behälters zu bilden.

## Claims

1. Method for manufacturing an internal shell of a composite type IV reservoir delimiting an internal cavity intended to accommodate a pressurized fluid and comprising at least one metal baseplate allowing connection between said internal cavity and the outside of the internal shell, said baseplate or baseplates being secured to the internal shell, said method comprising the following steps:
a) a step of applying at least one adhesive layer of a first polymer to the part or parts of the metal baseplate or baseplates intended to be in direct contact with the material of which the internal shell is made, said first polymer being a polymer comprising groups capable of adhering to a metal surface by the formation of covalent bonds, said groups being chosen from among maleic anhydride groups, silane groups, silanol groups, acrylic groups, peroxide groups and combinations of these groups;
b) a step of incorporating said baseplate or baseplates thus coated into a mould the internal cavity of which has a shape that corresponds to the shape of the internal shell that is to be obtained;
c) a step of forming, on the internal wall of the mould and on the part or parts of the baseplate or baseplates intended to be in contact with the material of which the internal shell is made, at least one layer of a second polymer different from said first polymer and adhering to the first polymer, thus forming the aforementioned internal shell equipped with the aforementioned baseplate or baseplates, said second polymer being a polymer in which some of its repetitive units are identical to these of the first polymer.

2. Method according to claim 1, in which the first polymer is a polymer comprising a main chain comprising a first repetitive unit derived from polymerisation of an ethylenic monomer and comprising a second repetitive unit comprising a pendant chain comprising at least one group capable of adhesion to a metal surface as defined in claim 1.

3. Method according to any one of the previous claims, in which the first polymer is a polymer belonging to the polyethylenes family.

4. Method according to claim 1 or 2, in which the first polymer is a polymer comprising a repetitive ethylenic unit and a repetitive unit derived from said repetitive ethylenic unit, comprising a pendant chain comprising at least one group capable of adhesion to a metal surface, this group being chosen from among the groups listed in claim 1.

5. Method according to any one of the previous claims, in which the deposition steps a) is done using the manual powder sprinkling technique, the electrostatic paint deposition technique or the fluidised bed deposition technique.

6. Method according to any one of the previous claims, in which step c) is done by rotational moulding.

7. Method according to any one of the previous claims, in which the second polymer is a thermoplastic polymer.

8. Method according to any one of the previous claims, in which the second polymer is a polymer belonging to the polyethylenes family or the polyamides family.

9. Method according to claim 8, in which, when the second polymer is a polymer belonging to the polyethylenes family, it is a linear or ramified polyethylene.

10. Method according to claim 8, in which, when the second polymer is a polymer belonging to the polyamides family, it is a polyamide-11 or a polyamide-12.

11. Method of preparing a composite type IV reservoir including the following steps:
- a step to implement the method for preparation of an internal shell of a type IV composite reservoir like that defined in any one of claims 1 to 10; and
- a step to deposit a fibrous material on the external surface of the shell thus obtained in the previous step, to form the external skin of the reservoir.
